Europäisches Patentamt

(19) European Patent Office

Office européen des brevets

(11) Numéro de publication : **0 280 591 B1**

(12) **FASCICULE DE BREVET EUROPEEN**

(45) Date de publication du fascicule du brevet :
04.09.91 Bulletin 91/36

(51) Int. Cl.⁵ : **C08F 259/08, C08F 214/22, C08F 214/24**

(21) Numéro de dépôt : 88400145.4

(22) Date de dépôt : 22.01.88

(54) **Copolymère hétérogène, de fluorure de vinylidène et de. chlorotrifluoéthylène - procédé de fabrication du copolymère hétérogène.**

(30) Priorité : 03.02.87 FR 8701283

(43) Date de publication de la demande :
31.08.88 Bulletin 88/35

(45) Mention de la délivrance du brevet :
04.09.91 Bulletin 91/36

(84) Etats contractants désignés :
AT BE DE FR GB IT NL SE

(56) Documents cités :
CHEMICAL ABSTRACTS, vol. 101, no. 10, 3rd
September 1984, page 42, no. 73689v, Columbus, Ohio, US; && JP-A-59 30 847 (CENTRAL
GLASS CO., LTD.) 18-02-1984

(73) Titulaire : **ATOCHEM**
**4 & 8, Cours Michelet La Défense 10**
**F-92800 Puteaux (FR)**

(72) Inventeur : **Blaise, Jean**
**23, Quai Perrache**
**F-69002 Lyon (FR)**
Inventeur : **Kappier, Patrick**
**20 Allée Simon St Jean**
**F-69130 Ecully (FR)**

(74) Mandataire : **Foiret, Claude et al**
**ATOCHEM Département Propriété Industrielle**
**F-92091 Paris la Défense 10 Cédex 42 (FR)**

## Description

La présente invention concerne un copolymère hétérogène de fluorure de vinylidène (VF$_2$) et de chlorotrifluoroéthylène (C$_2$F$_3$Cl) constitué de nodules d'élastomère de fluorure de vinylidène et de chlorotrifluoroéthylène dispersés dans une matrice formée d'un quasi polymère de fluorure de vinylidène. Ce copolymère est obtenu par copolymérisation de VF$_2$ et de C$_2$F$_3$Cl de façon à obtenir un élastomère sur lequel on polymérise du VF$_2$.

Le polyfluorure de vinylidène (PVDF) est un polymère connu pour ses excellentes propriétés en particulier de tenue mécanique et de tenue aux agents chimiques. Il présente cependant l'inconvénient de manquer de souplesse. Cet inconvénient limite son utilisation dans les applications où cette propriété est exigée par exemple les matériaux tubulaires demandant à être enroulés.

Pour remédier à cet inconvénient il a été proposé de copolymériser le VF$_2$ avec le C$_2$F$_3$Cl comme il est par exemple décrit dans la demande de brevet japonais 51-149392/76. Selon ce brevet on effectue la copolymérisation en ajoutant régulièrement le C$_2$F$_3$Cl au milieu réactionnel contenant la totalité du VF$_2$. Dans ce type de copolymérisation la vitesse d'introduction du C$_2$F$_3$Cl dans le VF$_2$, compte tenu des différences de vitesse de réaction entre les deux monomères, celle du VF$_2$ étant plus lente que celle du C$_2$F$_3$Cl, est ajustée de façon à obtenir un copolymère homogène du type

$$\text{-}(CF_2\text{-}CH_2\text{-}CF_2\text{-}CH_2\text{-}CF_2\text{-}CFCl)_n.$$

Les copolymères homogènes ainsi obtenus possèdent un haut degré de flexibilité, mais en contrepartie voient leur point de fusion de plus en plus abaissés au fur et à mesure qu'augmente le nombre de groupements —CF$_2$-CFCl— dans la chaine macromoléculaire. En outre au delà de 15% en poids de C$_2$F$_3$Cl dans le copolymère on entre dans le domaine des élastomères qui, en structure homogène, sont connus comme des produits aux faibles contraintes à la rupture et au seuil d'écoulement, mais, au fort allongement à la rupture.

Le copolymère selon l'invention présente l'intérêt de posséder à la fois une bonne souplesse et une température de fusion voisine de celle du PVDF. Comme il a déjà été indiqué le copolymère selon l'invention est un copolymère de VF$_2$ et de C$_2$F$_3$Cl caractérisé par la structure hétérogène des particules constituée de nodules d'élastomère copolymère homogène de VF$_2$ et C$_2$F$_3$Cl, dispersés dans une matrice formée d'un quasi polymère de VF$_2$. Tout en étant dispersés dans la matrice, les nodules y sont étroitement liés par les liaisons chimiques dues à la copolymérisation des monomères.

L'élastomère constituant les nodules est un copolymère homogène du type $\text{-}(CF_2\text{-}CH_2\text{-}CF_2\text{-}CH_2\text{-}CF_2\text{-}CFCl)_n$ dans lequel le groupement —CF$_2$—CFCl— du C$_2$F$_3$Cl mis en oeuvre représente en poids 15 à 70% de l'élastomère et de préférence 23 à 45%.

Cet élastomère est dispersé dans une matrice constituée d'un quasi polymère de VF$_2$. Cette matrice est appelée quasi polymère, car, comme il est explicité dans le procédé de fabrication ci-après, la matrice étroitement liée au nodule, est constituée, à l'interface liant le quasi polymère au nodule, par un copolymère de VF$_2$ et de C$_2$F$_3$Cl dont le C$_2$F$_3$Cl va en diminuant au fur et à mesure que l'on se rapproche de la surface de la particule, ledit copolymère étant progressivement et rapidement substitué par du PVDF quasiment pur. La présence de ce PVDF quasiment pur dans le quasi polymère est due à l'élimination pratiquement totale dans le milieu réactionnel de C$_2$F$_3$Cl après fabrication de l'élastomère représentant le noyau. Il est évidemment recommandé d'avoir le minimum de C$_2$F$_3$Cl dans ce quasi polymère qui doit dans l'idéal être essentiellement constitué de PVDF.

Ce quasi polymère de PVDF représente habituellement en poids 45% à 90% du copolymère hétérogène final. Le taux global de C$_2$F$_3$Cl dans le copolymère hétérogène représente de préférence de 5 à 15% en poids.

La structure originale du copolymère peut être mise en évidence par microscopie électronique. La méthode de mise en évidence consiste à révéler les nodules d'élastomère par un solvant sélectif, de préférence la méthyléthylcétone. Le copolymère, de préférence sous forme de granulé pour faciliter la manipulation, est enrobé dans une résine qui est coupée en fines lamelles de l'ordre de moins de 100 nanomètres au microtome. Les lamelles sont trempées environ douze heures dans le solvant à température ambiante. Le solvant dissout sélectivement l'élastomère de VF$_2$-C$_2$F$_3$Cl. Les micrographies (Grossissement de 25000) 1 et 2 jointes en annexe correspondant respectivement à un copolymère homogène selon l'art antérieur à 8% en poids total de C$_2$F$_3$Cl et à un copolymère hétérogène selon l'invention à 8% en poids totale de C$_2$F$_3$Cl montrent la différence de structure des produits. Selon 2 on constate l'existence des nodules enrobés de polymère représentés par des trous de dimension 0,1-0,4 μm correspondant à la place occupée par l'élastomère avant sa dissolution. Par contre 1 ne met en évidence qu'un film parfaitement homogène. En analysant par résonance magnétique nucléaire (RMN) l'extrait sec du solvant sélectif, on constate qu'il s'agit bien d'un élastomère de VF$_2$-C$_2$F$_3$Cl contenant la majorité des groupements —CF$_2$-CFCl— de l'ensemble du copolymère.

2

Alors que la température de fusion, mesurée par analyse thermique différentielle, du PVDF est de l'ordre de 169°C, la température de fusion des copolymères hétérogènes selon l'invention est de l'ordre de 160-170°C, c'est-à-dire dans des limites voisines de celle du PVDF, tout en possédant un module de flexion qui peut être abaissé à moins de 50% de celui du PVDF.

A titre comparatif entre un copolymère homogène et un copolymère selon l'invention les points de fusion respectifs sont de 153 et 168°C pour une teneur globale en poids de $C_2F_3Cl$ de 8% et de 144 et 164°C pour une teneur globale en poids de $C_2F_3Cl$ de 12%.

Le copolymère selon l'invention peut être obtenu par copolymérisation en émulsion ou suspension de $C_2F_3Cl$ et de $VF_2$, le principe en étant le suivant : dans une première étape on copolymérise dans le $VF_2$ le $C_2F_3Cl$ que l'on introduit progressivement dans le milieu en proportion suffisante pour obtenir un élastomère homogène, puis dans une seconde étape on poursuit la réaction de polymérisation du $VF_2$ en arrêtant l'alimentation en $C_2F_3Cl$ avec éventuellement ajout de $VF_2$ si la totalité du $VF_2$ à mettre en oeuvre n'a pas été initialement introduite dans le réacteur. L'essentiel du procédé de copolymérisation est que dans l'étape de préparation de l'élastomère la proportion en poids de $C_2F_3Cl$ mis en oeuvre par rapport au $VF_2$ copolymérisable soit au moins égale à 15% et au plus de préférence de l'ordre de 70%.

Bien que par commodité il soit préférable de former préalablement les nodules d'élastomère de $VF_2$-$C_2F_3Cl$ préalablement à la matrice de PVDF, il n'est pas exclu de polymériser dans une première étape le $VF_2$ puis à un degré d'homopolymérisation choisi d'introduire pour la seconde étape le $C_2F_3Cl$ pour former le nodule d'élastomère.

Dans la copolymérisation du $C_2F_3Cl$ et du $VF_2$, le rapport de réactivité relative de chaque monomère est très rapidement différent et la consommation de $C_2F_3Cl$ se trouve être beaucoup plus rapide que celle du $VF_2$. C'est pourquoi afin d'obtenir dans cette étape de copolymérisation un composé homogène, il est indispensable d'introduire progressivement le $C_2F_3Cl$ dans le milieu réactionnel.

Cette introduction progressive peut se faire selon tout moyen connu soit en continu soit en discontinu par ajouts successifs programmés en fonction de la vitesse de réactivité du milieu réactionnel et ce de façon à conserver l'homogénéité dudit milieu. Il est recommandé de former des particules d'élastomère de 0,05 à 0,5 μm et mieux de 0,1 à 0,2 μm.

De façon plus détaillée sont décrites ci-après les deux étapes du procédé.

Dans les conditions habituelles de la polymérisation en émulsion du $VF_2$ on opère dans un réacteur sous agitation en milieu aqueux contenant un émulsifiant choisi parmi les émulsifiants habituels. La réaction de polymérisation est amorcée par un agent producteur de radicaux libres hydrosolubles choisi habituellement parmi les persulfates alcalins. La température de réaction est généralement comprise entre 60 et 100°C pour des pressions de 60 à 100 bars. Le $VF_2$ peut être introduit initialement en totalité dans le réacteur, mais il peut être préférable de n'introduire initialement qu'une partie de la charge, le reste de $VF_2$ étant ajouté progressivement en cours de polymérisation de façon à maintenir la pression constante dans le réacteur. Dans l'étape de copolymérisation le $C_2F_3Cl$ est, compte tenu de la différence de vitesse de réaction avec le $VF_2$, introduit progressivement. Il est possible d'introduire simultanément le $VF_2$ et le $C_2F_3Cl$, mais dans ce cas il faut régler le débit de $C_2F_3Cl$ de façon telle que la formation des motifs $C_2F_3Cl$ soit contrôlée par rapport à la formation des motifs $VF_2$. Dans cette étape de copolymérisation il n'est pas indispensable de fabriquer un copolymère élastomère rigoureusement homogène, mais il est nécessaire que dans sa composition la teneur en poids de $C_2F_3Cl$ soit au moins de 15%.

Dans l'étape de copolymérisation est formé de 10 à 55% en poids de la totalité du produit formé dans les deux étapes. L'étape de copolymérisation est considérée comme terminée après arrêt de l'introduction de $C_2F_3Cl$.

Dans le cas préféré où la première étape consiste à copolymériser le $VF_2$ et $C_2F_3Cl$ pour fabriquer les nodules d'élastomères, il se produit dans la deuxième étape, après arrêt de l'introduction de $C_2F_3Cl$, un épuisement progressif du taux de $C_2F_3Cl$. Cet épuisement a pour effet de recouvrir les particules de latex d'élastomère par des couches de quasi polymère de $VF_2$ de plus en plus pauvre en $C_2F_3Cl$, les couches finales n'étant pratiquement plus que de l'homopolymère de $VF_2$. Les conditions de polymérisation du $VF_2$ dans l'étape de fabrication du quasi polymère peuvent différer de celles de l'étape de fabrication de l'élastomère dans la mesure où ces conditions correspondent à l'état hypercritique du $VF_2$. Habituellement cette étape de fabrication du quasi polymère s'effectue à une température comprise entre 50-90°C sous une pression de 50 à 90 bars.

Comme dans les polymérisations classiques les masses moléculaires des produits de chacune des étapes sont ajustées au moyen d'agent de transfert tels que cétone, ester en $C_3$ à $C_8$, dérivé chloré ou bromé et autres.

Le latex de copolymère hétérogène finalement obtenu est récupéré et transformé dans les conditions habituelles aux polymérisations en émulsion.

Le copolymère hétérogène selon l'invention peut encore être obtenu par le procédé de polymérisation en suspension.

Dans les conditions habituelles de la polymérisation en suspension on opère dans un réacteur sous agitation en milieu aqueux en présence d'un colloïde protecteur et d'un agent d'amorçage organosoluble.

Les agents d'amorçage les plus couramment utilisés sont les percarbonates d'alcoyle de $C_2$ à $C_6$ et le perpivalate de butyle tertiaire.

Le colloïde protecteur est choisi parmi ceux connus et utilisés dans ce genre de polymérisation. A titre d'exemple on peut citer les alcools polyvinyliques, les méthylcelluloses, les hydroxypropylcelluloses.

La température de polymérisation est comprise entre 30 et 90°C et la pression entre 50 et 100 bars.

Le $VF_2$ peut être introduit initialement en totalité dans le réacteur, mais il peut être préférable de n'introduire initialement qu'une partie de la charge, le reste de $VF_2$ étant ajouté progressivement en cours de polymérisation de façon à maintenir la pression constante dans le réacteur. Dans l'étape de copolymérisation le $C_2F_3Cl$ est, compte tenu de la différence de vitesse de réaction avec le $VF_2$, introduit progressivement. Il est possible d'introduire simultanément le $VF_2$ et le $C_2F_3Cl$, mais dans ce cas il faut régler le débit de $C_2F_3Cl$ de façon telle que la formation des motifs $C_2F_3Cl$ soit contrôlée par rapport à la formation des motifs $VF_2$. Dans cette étape de copolymérisation il n'est pas indispensable de fabriquer un copolymère élastomère rigoureusement homogène, mais il est nécessaire que dans sa composition la teneur en poids de $C_2F_3Cl$ soit au moins de 15%.

Dans l'étape de copolymérisation est formé de 10 à 55% en poids de la totalité du copolymère formé dans les deux étapes.

L'étape de copolymérisation est considérée comme terminée après arrêt de l'introduction de $C_2F_3Cl$.

Les conditions de polymérisation du $VF_2$ dans l'étape de fabrication du quasi polymère peuvent différer de celles de l'étape de fabrication de l'élastomère dans la mesure où ces conditions correspondent à l'état hypercritique du $VF_2$. Habituellement cette étape de fabrication du quasi polymère s'effectue à une température comprise entre 50-90°C sous une pression de 50 à 90 bars.

Comme dans les polymérisations classiques les masses moléculaires des produits de chacune de étapes sont ajustées au moyen d'agent de transfert tels que cétone, ester en $C_3$ à $C_8$, dérivé chloré ou bromé et autres.

Après polymérisation, le polymère obtenu en suspension est essoré, séché et granulé.

Selon les descriptions précédentes le procédé de fabrication de copolymère hétérogène de $VF_2$ et de $C_2F_3Cl$ en émulsion ou suspension est caractérisé en ce que dans une étape on copolymérise du $VF_2$ et du $C_2F_3Cl$ en introduisant progressivement ce dernier dans le milieu réactionnel de façon à former un élastomère homogène et en ce que dans une autre étape on forme une matrice de PVDF par polymérisation in situ de $VF_2$, l'étape de copolymérisation étant de préférence la première.

Les produits polymères thermoplastiques obtenus selon ces procédés contiennent, calculé en monomère, de 95 à 85% en poids de $VF_2$ sachant que 6 à 50% de ce monomère $VF_2$ se trouve contenu dans l'élastomère $VF_2$-$C_2F_3Cl$ le reste formant la matrice de quasi polymère.

Les exemples suivants illustrent l'invention sans toutefois la limiter.

## EXEMPLE 1(Comparatif)

Dans un autoclave de 60 l. muni d'un agitateur et d'un système de chauffage on introduit 40 l. d'eau désionisée, 50 g. d'émulsifiant $C_6F_{13}C_2H_4SO_3K$, 4 g. de pyrophosphate de sodium, 4 g. de persulfate de potassium et 300 g. de paraffine fondant à 54-56°C. On règle la température à 80°C et on met le réacteur sous vide de $9.3 \cdot 10^4$Pa (700 mm de Hg). On introduit ensuite 50 g. d'acétone, 450 g. de $C_2F_3Cl$ et on admet une pression de $VF_2$ de 90 bars. On démarre l'agitation et aussitôt la polymérisation fait baisser la pression. Lorsque la baisse de pression atteint 3 bars, on fait remonter la pression à 90 bars par ajout de $VF_2$. On introduit alors dans le milieu réactionnel 0,090 g. de $C_2F_3Cl$ par gramme de $VF_2$ introduit pour faire remonter la pression de 87 à 90 bars. La vitesse d'introduction de $VF_2$ est de 3 kg/h. Après avoir introduit 6 kg. de $VF_2$ on ajoute 400 g. d'acétone et 1 g. de persulfate de potassium. Après avoir introduit 18 kg. de $VF_2$ et 1,620 kg. de $C_2F_3Cl$ on dégaze le réacteur. On obtient un latex à 37% d'extrait sec, de composition homogène par microscopie avec un taux pondéral de 8% de $C_2F_3Cl$ mesuré par analyse RMN de l'extraction à la méthyléthylcétone.

Les résultats des mesures faites sur ce produit sont donnés dans le tableau suivant.

## EXEMPLE 2

Dans un autoclave de 60 l. on introduit 40 l. d'eau désionisée, 40 g. d'émulsifiant de formule $C_6F_{13}C_2H_4SO_3K$, 4 g. de pyrophosphate de sodium, 4 g. de persulfate et 500 g. de paraffine fondant entre 54 et 56°C. On règle la température à 80°C et on met le réacteur sous vide de $9.3 \cdot 10^4$Pa (700 mm de mercure).

On introduit ensuite 50 g. d'acétone, 500 g. de $C_2F_3Cl$ et on admet une pression de $VF_2$ de 90 bars.

Le démarrage de l'agitation marque le début de la polymérisation et fait baisser la pression. Lorsque la baisse de pression atteint 3 bars, on introduit de façon régulière du $VF_2$ pour remonter et maintenir la pression à 90 bars.

On introduit alors le $C_2F_3Cl$ à raison de 0,3 g. de $C_2F_3Cl$ par gramme de $VF_2$ introduit pour remonter et maintenir la pression à 90 bars dans le réacteur. Après un ajout de 6 kg. de $VF_2$ pour remonter et maintenir la pression à 90 bars et de 1,8 kg. de $C_2F_3Cl$, on arrête l'alimentation en $C_2F_3Cl$ et on ajoute 400 g. d'acétone et 1 g. de persulfate de potassium puis 12 kg. de $VF_2$ à une vitesse permettant de maintenir la pression à 90 bars. La vitesse d'introduction de $VF_2$ est de l'ordre de 3 kg/h pendant et après l'ajout du $C_2F_3Cl$. On dégaze le réacteur et on récupère un latex à 36% d'extrait sec de composition hétérogène par microscopie contenant un taux global de 8% en poids de $C_2F_3Cl$. Le copolymère obtenu contient 35% en poids de nodules contenant eux-mêmes environ 22,8% en poids de motifs provenant du $C_2F_3Cl$ mesurés par analyse RMN de l'extraction à la méthyléthylcétone.

Les résultats des mesures faites sur ce produit sont donnés dans le tableau suivant.

## EXEMPLE 3

Dans un autoclave de 60 l. on introduit 40 l. d'eau désionisée, 40 g. d'émulsifiant de formule $C_6F_{13}C_2H_4SO_3K$, 4 g. de pyrophosphate de sodium, 4 g. de persulfate et 500 g. de paraffine fondant entre 54 et 56°C. On règle la température à 80°C et on met le réacteur sous vide de $9.3 \cdot 10^4$Pa (700 mm de mercure). On introduit ensuite 50 g. d'acétone, 1100 g. de $C_2F_3Cl$ et on admet une pression de $VF_2$ de 90 bars. Le démarrage de l'agitation marque le début de la polymérisation et fait baisser la pression. Lorsque la baisse de pression atteint 3 bars, on introduit de façon régulière du $VF_2$ pour remonter et maintenir la pression à 90 bars. On introduit alors le $C_2F_3Cl$ à raison de 0,44 g. de $C_2F_3Cl$ par gramme de $VF_2$ introduit pour remonter et maintenir la pression à 90 bars dans le réacteur. Après un ajout de 4,10 kg. de $VF_2$ pour remonter et maintenir la pression à 90 bars dans le réacteur et de 1,84 kg. de $C_2F_3Cl$ on arrête l'alimentation en $C_2F_3Cl$ et on ajoute 400 g. d'acétone, 1 g. de persulfate de potassium puis 8,4 kg. de $VF_2$ à une vitesse permettant de maintenir la pression à 90 bars. La vitesse d'introdution du $VF_2$ est de l'ordre de 3 kg/h pendant et après l'ajout du $C_2F_3Cl$. On dégaze le réacteur et on récupère un latex à 37% d'extrait sec de composition hétérogène par microscopie contenant un taux global de 14% en poids de $C_2F_3Cl$. Le copolymère obtenu contient 45% en poids de nodules contenant eux-mêmes environ 31% en poids de motifs provenant du $C_2F_3Cl$ mesurés par analyse RMN de l'extraction à la méthyléthylcétone.

Les résultats des mesures faites sur ce produit sont donnés dans le tableau suivant.

## EXEMPLE 4

Dans un autoclave de 60 l. on introduit 40 l. d'eau désionisée, 40 g. d'émulsifiant de formule $C_6F_{13}C_2H_4SO_3K$, 4 g. de pyrophosphate de sodium, 4 g. de persulfate et 500 g. de paraffine fondant entre 54 et 56°C. On règle la température à 80°C et on met le réacteur sous vide de $9.3 \cdot 10^4$Pa (700 mm de mercure). On introduit ensuit 50 g. d'acétone, 600 g. de $C_2F_3Cl$ et on admet une pression de $VF_2$ de 90 bars.

Le démarrage de l'agitation marque le début de la polymérisation et fait baisser la pression. Lorsque la baisse de pression atteint 3 bars, on introduit de façon régulière du $VF_2$ pour remonter et maintenir la pression à 90 bars. On introduit alors le $C_2F_3Cl$ à raison de 0,3 g. de $C_2F_3Cl$ par gramme de $VF_2$ introduit pour remonter et maintenir la pression à 90 bars dans le réacteur. Après un ajout de 5,46 kg. de $VF_2$ pour remonter et maintenir la pression à 90 bars dans le réacteur et de 1,64 kg. de $C_2F_3Cl$ on arrête l'alimentation en $C_2F_3Cl$ et on ajoute 400 g. d'acétone et 1 g. de persulfate de potassium puis 6,82 kg. de $VF_2$ à une vitesse permettant de maintenir la pression à 90 bars. La vitesse d'introduction du $VF_2$ est de l'ordre de 3 kg/h pendant et après l'ajout de $C_2F_3Cl$. On dégaze le réacteur et on récupère un latex à 33% d'extrait sec de composition hétérogène par microscopie contenant un taux global de 12% en poids de $C_2F_3Cl$. Le copolymère obtenu contient 53% en poids de nodules contenant eux-mêmes environ 22,6% en poids de motifs provenant du $C_2F_3Cl$ mesurés par analyse RMN de l'extraction à la méthyléthylcétone.

Les résultats des mesures faites sur ce produit sont donnés dans le tableau suivant.

## EXEMPLE 5

Dans un autoclave de 60 l. on introduit 40 l. d'eau désionisée, 40 g. d'émulsifiant de formule $C_6F_{13}C_2H_4SO_3K$, 4 g. de pyrophosphate de sodium, 4 g. de persulfate et 500 g. de paraffine fondant entre 54 et 56°C. On règle la température à 80°C et on met le réacteur sous vide de $9.3 \cdot 10^4$Pa (700 mm de mercure). On introduit ensuite 50 g. d'acétone, 600 g. de $C_2F_3Cl$ et on admet une pression de $VF_2$ de 90 bars.

Le démarrage de l'agitation marque le début de la polymérisation et fait baisser la pression. Lorsque la baisse de pression atteint 3 bars, on introduit de façon régulière du $VF_2$ pour maintenir la pression à 90 bars.

On introduit alors le $C_2F_3Cl$ à raison de 0,3 g. de $C_2F_3Cl$ par gramme de $VF_2$ introduit pour remonter et maintenir la pression à 90 bars dans le réacteur. Après un ajout de 2,74 kg. de $VF_2$ pour remonter et maintenir la pression à 90 bars dans le réacteur et de 0,82 kg. de $C_2F_3Cl$ on arrête l'alimentation en $C_2F_3Cl$ et on ajoute 400 g. d'acétone, 1 g. de persulfate de potassium puis 8,72 kg. de $VF_2$ à une vitesse permettant de maintenir la pression à 90 bars. La vitesse d'introduction du $VF_2$ est de l'ordre de 3 kg/h pendant et après l'ajout du $C_2F_3Cl$. On dégaze le réacteur et on récupère un latex à 36% d'extrait sec de composition hétérogène par microscopie contenant un taux global de 7,4% en poids de $C_2F_3Cl$. Le copolymère obtenu contient 32% en poids de nodules contenant eux-mêmes environ 23% en poids de motifs provenant de $C_2F_3Cl$ mesurés par analyse RMN de l'extraction à la méthyléthylcétone.

Les résultats des mesures faites sur ce produit sont donnés dans le tableau suivant :

| Réf. | Température de fusion par analyse thermique différentielle °C | MPa Module d'élasticité en flexion |
|---|---|---|
| Exemple 1 | 153 | 800 |
| Exemple 2 | 168 | 805 |
| Exemple 3 | 163 | 414 |
| Exemple 4 | 164 | 530 |
| Exemple 5 | 168 | 829 |
| PVDF pur (Foraflon 1000 HD) | 169 | 1 700 |

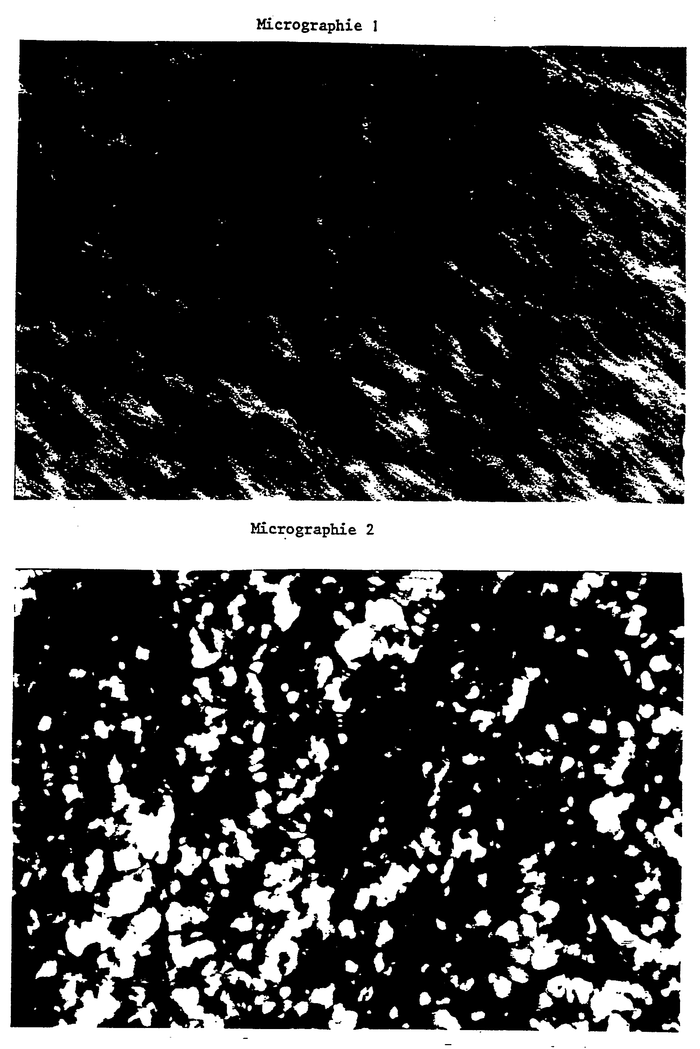

## Revendications

1. Copolymère de fluorure de vinylidène et de chlorotrifluoroéthylène caractérisé en ce que la structure hétérogène des particules est constituée de nodules d'un élastomère copolymère homogène de fluorure de vinylidène et de chlorotrifluoroéthylène dispersés dans une matrice, et chimiquement liés à elle, formée d'un quasi polymère de fluorure de vinylidène recouvrant lesdits nodules en couches constituées de copolymère de fluorure de vinylidène et de chlorotrifluoroéthylène de plus en plus pauvre en chlorotrifluoréthylène, les couches finales n'étant pratiquement plus que de l'homopolymère de fluorure de vinylidène.

2. Copolymère selon la revendication 1 caractérisé en ce que le quasi polymère représente 45 à 90% en poids pour 55 à 10% en poids de nodules d'élastomère.

3. Copolymère selon l'une des revendications 1 ou 2 caractérisé en ce que l'élastomère contient de 15 à 70% en poids de groupement —$CF_2$-CFCl—.

4. Copolymère selon l'une des revendications 1 à 3 caractérisé en ce que la taille des nodules d'élastomère est comprise entre 0,05 et 0,5 μm (micron).

5. Copolymère selon l'une des revendications 1 à 4 caractérisé en ce que son point de fusion, mesuré par analyse thermique différentielle, est compris entre 160 et 170°C.

6. Procédé de fabrication des copolymères selon l'une des revendications 1 à 5 par copolymérisation en émulsion ou suspension du fluorure de vinylidène et du chlorotrifluoroéthylène caractérisé en ce qu'en deux étapes ininterrompues d'une part on copolymérise du fluorure de vinylidène et du chlorotrifluoroéthylène et d'autre part on polymérise du fluorure de vinylidène.

7. Procédé selon la revendication 6 caractérisé en ce que dans une première étape on copolymérise le fluorure de vinylidène et le chlorotrifluoroéthylène et dans une deuxième étape, après arrêt de l'introduction

6

du chlorotrifluoroéthylène, on poursuit la polymérisation de fluorure de vinylidène.

8. Procédé selon l'une des revendications 6 ou 7 caractérisé en ce que dans l'étape de copolymérisation la proportion en poids du chlorotrifluoroéthylène mis en oeuvre par rapport au fluorure de vinylidène est au moins de 15%.

9. Procédé selon l'une des revendications 5 à 8 caractérisé en ce que le fluorure de vinyle mis en oeuvre dans l'étape de copolymérisation représente 6 à 50% en poids de la totalité du fluorure de vinylidène nécessaire à l'ensemble des deux étapes.

10. Procédé selon l'une des revendications 5 à 9 caractérisé en ce que le fluorure de vinyle mis en oeuvre représente 85 à 95% en poids de la totalité des monomères mis en oeuvre.

## Patentansprüche

1. Vinylidenfluorid-Chlortrifluorethylen-Copolymeres, dadurch gekennzeichnet, daß die heterogene Teilchenstruktur aus Knötchen eines homogenen Elastomercopolymerisats aus Vinylidenfluorid und Chlortrifluorethylen besteht, die in einer Matrix verteilt und chemisch daran gebunden sind, welche von einem diese Knötchen in Schichten bedeckenden Vinylidenfluorid-Quasipolymeren gebildet ist, wobei die Schichten aus einem mehr und mehr an Chlortrifluorethylen verarmenden Vinylidenfluorid-Chlortrifluorethylen-Copolymeren bestehen, so daß die letzten Schichten praktisch nur noch das Vinylidenfluorid-Homopolymere enthalten.

2. Copolymeres nach Anspruch 1, dadurch gekennzeichnet, daß das Quasipolymere 45 bis 90 Gew.% und die Elastomerknötchen 55 bis 10 Gew.% ausmachen.

3. Copolymeres nach Anspruch 1 oder 2, dadurch gekennzeichnet, daß das Elastomere 15 bis 70 Gew.% ($-CF_2-CFCl-$)-Gruppen enthält.

4. Copolymeres nach einem der Ansprüche 1 bis 3, dadurch gekennzeichnet, daß die Größe der Elastomerknötchen zwischen 0,05 und 0,5 µm beträgt.

5. Copolymeres nach einem der Ansprüche 1 bis 4, dadurch gekennzeichnet, daß sein mit der Differentialthermoanalyse gemessener Schmelzpunkt zwischen 160 und 170°C liegt.

6. Verfahren zur Herstellung der Copolymeren nach einem der Ansprüche 1 bis 5 durch Emulsions- oder Suspensionscopolymerisation von Vinylidenfluorid und Chlortrifluorethylen, dadurch gekennzeichnet, daß man in zwei aufeinanderfolgenden Stufen einerseits Vinylidenfluorid und Chlortrifluorethylen copolymerisiert und andererseits Vinylidenfluorid polymerisiert.

7. Verfahren nach Anspruch 6, dadurch gekennzeichnet, daß man in einer ersten Stufe Vinylidenfluorid und Chlortrifluorethylen copolymerisiert und in einer zweiten Stufe nach Beendigung der Chlortrifluorethylenzufuhr die Polymerisation des Vinylidenfluorids fortsetzt.

8. Verfahren nach Anspruch 6 oder 7, dadurch gekennzeichnet, daß in der Copolymerisationsstufe der Anteil des eingesetzten Chlortrifluorethylens, bezogen auf das Vinylidenfluorid, wenigstens 15 Gew.% beträgt.

9. Verfahren nach einem der Ansprüche 5 bis 8, dadurch gekennzeichnet, daß das in der Copolymerisationsstufe eingesetzte Vinylidenfluorid 6 bis 50 Gew.% des gesamten, für beide Stufen erforderlichen Vinylidenfluorids beträgt.

10. Verfahren nach einem der Ansprüche 5 bis 9, dadurch gekennzeichnet, daß das eingesetzte Vinylidenfluorid 85 bis 95 Gew.% der gesamten eingesetzten Monomeren ausmacht.

## Claims

1. A copolymer of vinylidene fluoride and chlorotrifluoroethylene, characterized in that the heterogeneous structure of the particles is formed by nodules of a homogeneous copolymeric elastomer of vinylidene fluoride and chlorotrifluoroethylene dispersed in a matrix and chemically bonded thereto, said matrix being formed by a quasi polymer of vinylidene fluoride coating said nodules in layers formed by vinylidene fluoride/chlorotrifluoroethylene copolymer having a progressively lower chlorotrifluoroethylene content, the final layers comprising substantially solely vinylidene fluoride homopolymer.

2. A copolymer according to claim 1, characterized in that the quasi polymer represents 45 to 90% by weight to 55 to 10% by weight of elastomer nodules.

3. A copolymer according to claims 1 or 2, characterized in that the elastomer contains 15 to 70% by weight of the $-CF_2-CFCl-$ group.

4. A copolymer according to one of claims 1 to 3, characterized in that the size of the elastomer nodules is between 0.05 and 0.5 µm (microns).

5. A copolymer according to one of claims 1 to 4, characterized in that its melting point, measured by differential thermal analysis, is between 160 and 170°C.

6. A process for the production of copolymers according to one of claims 1 to 5 by copolymerization in an emulsion or suspension of vinylidene fluoride and chlorotrifluoroethylene, characterized in that in two continuous stages on the one hand the vinylidene fluoride and chlorotrifluoroethylene are copolymerized, and on the other hand the vinylidene fluoride is polymerized.

7. A process according to claim 6, characterized in that in a first stage the vinylidene fluoride and the chlorotrifluoroethylene are copolymerized and in a second stage, after the chlorotrifluoroethylene has ceased to be introduced, the vinylidene fluoride polymerization is pursued.

8. A process according to one of claims 6 or 7, characterized in that in the copolymerization stage the proportion by weight of the chlorotrifluoroethylene used is at least 15% in relation to the vinylidene fluoride.

9. A process according to one of claims 5 to 8, characterized in that the vinyl fluoride used in the copolymerization stage represents 6 to 50% by weight of the total quantity of vinylidene fluoride required for the two stages taken together.

10. A process according to one of claims 5 to 9, characterized in that the vinyl fluoride used represents 85 to 95% by weight of the total quantity of the monomers used.

Micrographie 1

Micrographie 2